Europäisches Patentamt

(19) European Patent Office

Office européen des brevets

(11) Publication number: **0 018 221**
**B1**

(12) **EUROPEAN PATENT SPECIFICATION**

(45) Date of publication of patent specification: **12.10.83**

(51) Int. Cl.³: **G 01 N 27/16**

(21) Application number: **80301263.2**

(22) Date of filing: **18.04.80**

(54) Method of and apparatus for measuring the amount of combustibles present in a gas.

(30) Priority: **20.04.79 US 31750**

(43) Date of publication of application:
**29.10.80 Bulletin 80/22**

(45) Publication of the grant of the patent:
**12.10.83 Bulletin 83/41**

(84) Designated Contracting States:
**DE FR GB IT NL**

(56) References cited:
**DE - A - 2 333 270**
**DE - A - 2 445 550**
**DE - B - 1 207 669**
**US - A - 3 239 828**
**US - A - 3 399 398**
**US - A - 3 678 489**

(73) Proprietor: **AMETEK, INC.**
**410 Park Avenue 21st Floor**
**New York, New York 10022 (US)**

(72) Inventor: **Meyer, Emilio G.**
**42 Via Mincio**
**Quinto de Stampi Rozzano (IT)**

(74) Representative: **Cotter, Ivan John et al,**
**D. YOUNG & CO. 10 Staple Inn**
**London WC1V 7RD (GB)**

Courier Press, Leamington Spa, England

# Method of and apparatus for measuring the amount of combustibles present in a gas

This invention relates to a method of and apparatus for measuring the amount of combustibles present in a gas, for instance in gaseous by-products of a combustion process.

It is known to employ combustible gas detectors that utilise a catalyst coated, hot wire filament to detect combustibles present in the gaseous by-products of a combustion process. US Patent No. 1 504 707 is an example of one of the commercially available catalytic detectors. The catalytic detector is a dual filament detector in a balanced bridge circuit. Current passes through both filaments, one filament being a detector filament and another filament being a reference filament. The current heats the filaments to a temperature well below the ignition temperature of the gases present.

The detector filament is coated with a catalyst which causes the combustibles to burn on the surface of the filament even at the low operating temperature of the filament. The reference filament is not coated with a catalyst but is responsive to changes in the ambient temperature of the gas being measured, the electrical power applied to the bridge circuit, gas thermal conductivity, specific heat, etc.

For a gas containing combustibles, the temperature of the detector filament increases because of burning of the gas on the surface of the filament. Consequently, the resistance of the detector filament increases thereby unbalancing the bridge circuit and changing the output voltage from the circuit to a suitable measuring device. The voltage unbalance generated by the burning of combustibles on the detector filament is converted by the measuring device to a quantitative electrical measure of the combustibles present in the gas.

The burning of the combustibles on the surface of the detector filament increases the resistance and temperature of the filament. The increase in the temperature is substantial for gases containing a high concentration of combustibles and promotes rapid burnout of the detector filament. Also, continually exposing the catalyst to elevated temperatures results in evaporation of the catalyst and reduces the useful life of the filament. In addition to the fact that the unbalanced voltage serves as the electrical measure of the concentration of combustibles in the gas, the response time to provide a quantitative readout of the concentration is determined by the time required for the detector filament to change in temperature.

DE—A—2 445 550 discloses a combustible gas analyser that includes two Wheatstone resistance bridges, namely a measuring bridge and a reference bridge, in which the output of each bridge is directed to an amplifier and is fed back to an input terminal of the respective bridge. The magnitude of the feedback signal is controlled to restore the temperature of a temperature sensitive resistor of the bridge to a preselected temperature so that the temperature of the resistor is maintained constant and it will not burn out. The outputs of the amplifiers are separately directed to a comparator and compared to provide an output to a meter for indicating the combustible content of the gas. When a combustible gas is present, the output from the amplifiers is not equal resulting in an increase in the output measured by the meter. An increase in the output is a measure of the concentration of combustible present in the gas.

GB 1 437 075 discloses a gas detector in which a thermochemical reaction takes place on a catalytic element forming part of a bridge. When the catalytic element is exposed to a mixture of gases which do not react at the catalytic element, the temperature of the element is maintained constant by altering a variable voltage source to reduce the power supplied to the element and to balance the bridge. When the catalytic element is exposed to a gas containing a combustibles concentration the variable voltage source is again altered to keep the temperature of the catalytic element constant and the bridge balanced. Thus the difference in power supplied to the bridge to maintain the bridge in balance and the temperature of the catalytic element constant constitutes a measurement of the amount of combustibles present in the gas.

According to a first aspect of the present invention there is provided a method of measuring the amount of combustibles present in a gas, comprising exposing the gas to a catalytic filament type detector means and a reference means including a non-catalytic filament, feeding supply currents to the detector means and to the reference means, independently controlling said supply currents in such a manner that the filaments of both the detector means and the reference means are kept at preselected temperatures, the control of the supply current to the detector means being effected by the output signal of the detector means, and measuring the magnitude of the adjusted supply current to the detector means in comparison to a signal corresponding to the output signal of the reference means to indicate a quantitative measurement of the combustibles present in the gas, characterised by the step of effecting the control of the supply current to the detector means by feeding back the output signal from the detector means to a switching means at the input of the detector means, which switching means, in the case of a departure of the filament temperature from the preselected value, adjusts the magnitude of the supply current by interrupting the supply current to the detector means for the period required for the filament of the detector means to adopt again the preselected temperature.

According to a second aspect of the invention there is provided apparatus for measuring the amount of combustibles present in a gas, comprising a catalytic filament type detector means arranged for exposure to the gas, the detector means having an input terminal for receiving a supply current and an output terminal for supplying an output signal, reference means comprising a non-catalytic filament and being arranged for exposure to the gas, a power source for feeding supply currents to the detector means and the reference means, feedback means for controlling said supply currents in such a manner that the filaments are kept at preselected temperatures, said feedback means comprising a feedback circuit connected between the output terminal of the detector means and the input terminal of the detector means, and meter means connected to the detector means and the reference means for recording the difference in magnitude between the supply current to the detector means and a signal corresponding to the output signal of the reference means as a quantitative measurement of the amount of combustibles present in the gas, characterised in that the feedback circuit includes a power switching means for controlling the level of the supply current to the detector means, which power switching means, in the case of a departure of the filament temperature from its preselected value, adjusts the magnitude of the supply current by interrupting the supply current to the detector means input terminal for the period required for the filament of the detector means to adopt again the preselected temperature.

In embodiments of the invention disclosed hereinbelow the detector means and the reference means are balanced bridge circuits, each circuit including four resistors or filaments. The detector or measuring bridge includes one resistor coated with a catalyst and exposed to the gas being measured. Similarly, the reference bridge includes one resistor or filament also exposed to the gas; however, the exposed filament of the reference bridge is not coated with a catalyst. The supply currents to both the detector bridge and the reference bridge are regulated to maintain the exposed filaments at a temperature below the ignition temperature of the gas being measured. However, the presence of the catalyst on the detector filament of the measuring bridge causes the combustible gases to burn on the surface of the detector filament even at the low temperature of the detector filament. Thus, with this arrangement, the temperature and resistance of each exposed filament is proportional to the ambient temperature of the gas, the electrical power supplied to the filament, and for the detector filament combustion of the gas.

Preferably, the exposed filaments of the detector bridge and the reference bridge have equal resistance values so that the output signal generated by the bridges are equal or balanced to one another. However, the reference bridge may be provided with a variable resistor to compensate for tolerances which may exist in the filaments of the reference bridge and particularly the exposed filament of the reference bridge. Thus, by selectively adjusting the variable resistor, the output signals from the respective bridges to the meter means which measures the combustibles concentration will be balanced for an initial zero reading of the meter means. A variation in the magnitude of the output signal of the detector bridge from that of the reference bridge is indicated by the meter means in terms of the quantitative measurement of the concentration of combustibles in the gas being measured.

The output signal from the detector bridge is conveyed to the feedback circuit, which includes an operational amplifier which transmits a signal proportional to the voltage across the detector filament to the power switching means. The power switching means comprises a transistor connected to the input terminal of the detector bridge. With this arrangement, for a balanced bridge, the operational amplifier transmits a signal to the transistor thereby switching the transistor to a conductive state for supplying an input signal to the detector bridge.

Combustion of the gas on the surface of the detector filament unbalances the detector bridge to thereby reduce the magnitude of the input signal to the operational amplifier and accordingly reduce the feedback to the transistor, switching the transistor to a non-conductive state. Consequently, the input signal to the detector bridge is interrupted thereby reducing the voltage applied to the detector bridge. As a result, the temperature of the detector filament is reduced so that the detector bridge is returned to a balanced condition. Thus, by switching of the transistor between a conductive and a non-conductive state, the detector bridge is maintained balanced and the temperature of the detector filament remains constant.

The variation in the magnitude of the output signal of the detector bridge and the reference bridge is indicated by the deflection of the meter means, which is preferably a galvanometer. The meter readout is a quantitative measurement of the amount of combustibles present in the gas being measured. Therefore, the detector bridge is maintained in a balanced condition and the adjustment of the input signal to the detector bridge to maintain the detector bridge in a balanced condition provides a measurement of the combustibles in the gas. The detector filament remains at a preselected constant temperature, which prevents burnout of the detector filament for gases having a high concentration of combustibles, and also prevents evaporation of the catalyst on the detector filament to prolong the useful life of the detector filament.

The invention will now be further described, by way of illustrative and non-limiting example, with reference to the accompanying drawings, in which:

Figure 1 is an electrical schematic of apparatus for measuring the amount of combustibles present in a gas, illustrating a pair of balanced bridge circuits with control means for regulating voltages applied to the circuits; and

Figure 2 is an electrical schematic similar to Figure 1, illustrating apparatus for operating a detector filament and a reference filament at different temperatures.

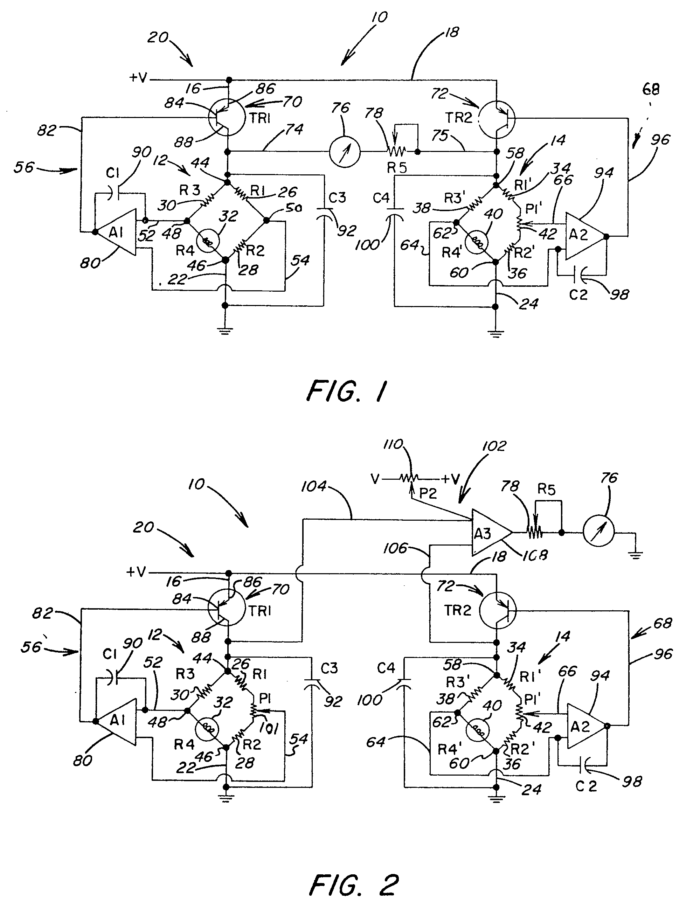

Referring to the drawings and particularly to Figure 1, there is illustrated a combustibles detector circuit 10 that is operable to provide a quantitative measurement of the amount of combustibles present in gaseous by-products of a combustion process. The detector circuit 10 includes a pair of balanced bridge circuits 12 and 14. The circuit 12 is a detector or measuring bridge and the circuit 14 is a reference bridge. The bridges 12 and 14 are connected by conductors 16 and 18 respectively to a DC voltage source 20. The bridges 12 and 14 are also connected by conductors 22 and 24 respectively to ground.

The detector bridge 12 includes resistors 26, 28, 30 and 32 arranged in a balanced bridge circuit. Similarly, the reference bridge 14 includes resistors 34, 36, 38, 40 in addition to a variable resistor 42. The detector bridge 12 includes an input terminal 44 connected to the voltage source 20, an output terminal 46 connected to ground, and output terminals 48 and 50 connected by conductors 52 and 54 to a feedback control circuit 56. The reference bridge 14 includes an input terminal 58 connected to the voltage source 20, an output terminal 60 connected to ground, an output terminal 62, and also an output terminal provided by the variable resistor 42. The output terminal 62 and the variable resistor 42 are connected by conductors 64 and 66 respectively to a feedback control circuit 68. The feedback control circuits 56 and 68 are connected to the respective input terminals of the bridges 12 and 14 by power switching devices 70 and 72. Preferably, the switching devices include transistors TR1 and TR2, as illustrated in Figure 1. The output of the transistor TR1 is supplied by a conductor 74 to a readout device 76. The output of the transistor TR2 is supplied by a conductor 75 through a slide-wire potentiometer 78 to the readout device 76.

The resistor 32 of the detector bridge 12, which acts as a detector filament, and the resistor 40 of the reference bridge 14, which acts as a reference filament, are exposed to a flow stream of a gas to be measured for combustibles. Current passes through both filaments 32 and 40, heating them to a temperature well below the ignition temperature of the gas present. The detector filament 32 is coated with a catalyst which causes the combustibles in the gas to burn on the surface of the filament 32 even at the low operating temperature of the filament. The reference filament 40 is identical to the detector filament 42 except that it is not coated with a catalyst. The resistance of the filaments 32 and 40 changes in response to changes of the ambient temperature of the gas being measured, gas thermal conductivity, specific heat and the electrical power applied to the filaments. In addition, the resistance and temperature of the detector filament 32 increase when a gas containing combustibles is burned on the surface of the filament 32.

The bridges 12 and 14 are initially balanced so that the output terminals 48 and 50 of the bridge 12 are at the same potential, and the output terminal 62 and the terminal provided by the variable resistor 42 of the bridge 14 are at the same potential. Adjustments in the output voltage of the bridge 14 for balancing the output voltage with the output voltage of the bridge 12 are accomplished by the variable resistor 42. Thus, in the absence of a gas containing combustibles, the output voltages of the detector and reference bridges 12 and 14 are equal. This is the balanced condition of the bridges and is indicated by zero deflection of the readout device 76, which is preferably a galvanometer. Accordingly, any variation which occurs in the output voltage of the detector bridge 12 results in a deflection of the galvanometer 76 to indicate the concentration of combustibles present in the gas. The slidewire potentiometer 78 provides a means for adjusting the galvanometer 76 so that the galvanometer will read full scale for the respective gas being measured.

When the temperature of the detector filament 32 increases due to the combustion of gas on its surface, the resistance of the filament 32 increases thereby unbalancing the bridge circuit 12. Consequently, the outputs from the terminals 48 and 50 are no longer equal. As stated above, the reference filament 40 does not react in this manner because the filament is not coated with a catalyst; therefore, the reference bridge 14 remains balanced. However, due to variations that may occur in the ambient temperature of the gas being measured and the electrical power supplied to the reference bridge 14, the output voltages from the terminal 62 and the variable resistor 42 may vary. In order to compensate for the variation the feedback control circuit 68 and the transistor 72 are automatically actuated to regulate the voltage supplied to the bridge 14 to maintain the bridge in a balanced condition.

Under normal operating conditions the voltages at the output terminals 48 and 50 of the detector bridge 12 are equal, and a responsive signal is supplied to the feedback control circuit 56. The control circuit 56 includes an operational amplifier 80 having inputs connected to the conductors 52 and 54. The output of the operational amplifier 80 is connected by a conductor 82 to the base 84 of the transistor TR1 (70). The emitter 86 of the transistor 70 is connected by the conductor 16 to the voltage source 20, and the transistor collector 88 is connected to the input terminal 44 of the detector bridge 12.

Under balanced bridge conditions, the output terminals 48 and 50 of the detector bridge 12 are at the same potential. The amplifier 80 is actuated to supply an output signal of a preselected magnitude through the conductor 82 to the transistor base 84. The output signal of the amplifier 80 switches the transistor 70 to a conductive state to permit current flow from the source 20 to the detector bridge input terminal 44. The voltage that is applied to the terminal 44 is a regulated voltage that maintains the bridge circuit 12 in a balanced condition when a gas free of combustibles is exposed to the detector filament 32. The voltage applied to the bridge 12 will vary from the present regulated voltage when a gas containing combustibles is exposed to the detector filament 32. (As mentioned above, the catalyst on the detector filament 32 promotes ignition of the combustibles in the gas even at the low operating temperature of the filament 32.)

Burning of the combustibles increases the temperature of the detector filament 32 to, in turn, increase the resistance of the filament 32. The voltages at the output terminals 48 and 50 are no longer equal, creating an unbalanced bridge condition. Consequently, the input signals to the operational amplifier 80 from the output terminals 48 and 50 are no longer equal. The amplifier 80 is actuated to operate at a reduced output so that the magnitude of the input signal to the transistor base 84 is lowered, thereby switching the transistor 70 from a conductive state to a non-conductive state. The collector current is interrupted, and the voltage applied to the detector bridge 12 is reduced.

Reducing the detector bridge voltage reduces the temperature of the detector filament 32 to a point where the detector bridge 12 is again balanced. The amplifier 80 is restored to operation at an increased output level, and the transistor 70 is switched to a conductive state. The voltage of the detector bridge 12 is then increased to a magnitude to maintain the bridge in a balanced condition and the temperature of the detector filament 32 constant. Thus, by switching the transistor 70 between a conductive and a non-conductive state in response to the operating level of the amplifier 80, the voltage applied to the detector bridge 12 is continually being adjusted to maintain a balanced bridge condition.

The adjustment in the voltage applied to the detector bridge 12 is an indication of the combustibles concentration. The voltage differential is recorded by the galvanometer 76 and is indicated by a meter deflection from an initial zero reading. The meter deflection supplies a quantitative readout of the concentration of combustibles present in the gas being measured. Accordingly, the combustibles concentration is proportional to the adjustment in the voltage between the transistors 70 and 72. Thus, the voltage applied to the detector bridge 12 to maintain the bridge balanced is used as a measurement of the combustibles concentration, unlike conventionally known catalytic detectors in which the voltage unbalance serves as a measurement of the combustibles concentration. By maintaining the detector bridge in a balanced condition, the detector filament 32 is maintained at a constant temperature to increase the operating life of the filament 32.

As illustrated in Figure 1, a capacitor 90 is connected to the conductor 52 at the input to the amplifier 80 and to the output of the amplifier 80. The function of the capacitor 90 is to dampen or slow down the operation of the amplifier 80 between a high output state and a low output state. With this arrangement the switching of the transistor 70 between a conductive state and a non-conductive state is slowed down to reduce ripple effect at the output of the transistor 70 to the galvanometer 76. This provides a more uniform readout of the galvanometer.

As the operational amplifier 80 fluctuates between a high output state and a low output state, the transistor 70 switches on and off. Preferably, the rate of transition between these two states is delayed sufficiently by the capacitor 90 to provide an average reading of the combustibles concentration on the galvanometer 76. To further prevent an undesirably rapid deflection of the galvanometer 76, an additional storage capacitor 92 may be positioned across the bridge input terminal 44 and the connection of the output terminal 46 to ground. When the transistor 70 is in a conductive state the capacitor 92 stores voltage. The stored voltage is released by the capacitor 92 over a predetermined interval to the detector bridge 12 when the transistor 70 is in a non-conductive state. The voltage supplied to the bridge 12 through the capacitor 92 is also supplied to the galvanometer 76. A rapid transition in the applied voltage due to combustion of the gas on the filament 32 is averaged out by the operation of the capacitor 92 so that a uniformly changing readout, as opposed to a rapidly changing readout, is indicated by the galvanometer 76. In this manner, the performance of the galvanometer is substantially improved.

During the non-conductive cycle of operation of the transistor 70, the temperature of the detector filament 32 decreases. When the temperature of the filament 32 decreases to a level below its initial operating temperature, at which there is no combustion on its surface, the amplifier 80 is switched to a high output state. This returns the transistor 70 to a conductive state. The voltage of the capacitor 92 is increased to a magnitude that once again balances the bridge 12. Thus, the transistor 70 continues to turn on and off to maintain the capacitor 92 at a voltage level which balances the bridge 12. By maintaining the bridge balanced, the temperature of the filament 32 remains constant. Accordingly, the variation in the voltage applied to the bridge 12 to maintain a balanced bridge condition is an indication of the combustibles concentration in the gas being measured.

The reference detector 14 is provided with a feedback control circuit 68 which is similar in construction to the feedback control circuit 56 of the detector bridge 12. The feedback control circuit 68 includes an operational amplifier 94 arranged to receive outputs from the variable resistor 42 and from the bridge output terminal 62. The amplifier 94 is connected by a conductor 96 to the power switching device 72 (transistor TR2). Also, the feedback control circuit 68 includes a capacitor 98 positioned across the input to the amplifier 94 from the output terminal 62 and the output of the amplifier 94 to the transistor 72. A storage capacitor 100, similar to the storage capacitor 92 in the bridge 14, is positioned across the output of the transistor 72 to the input terminal 58 and the output terminal 60 to ground.

For the reference bridge 14, the resistance of the reference filament 40 changes in response to the ambient temperature of the gas being measured and the voltage applied to the filament 40. A change in either of these factors will unbalance the reference bridge 14 and actuate the amplifier 94 to switch from a high output state to a low output state. Consequently, the transistor 72 becomes non-conductive and the voltage applied to the bridge 14 is adjusted to restore the bridge to a balanced voltage condition at which the temperature of the reference filament 40 remains at a preselected level. Thus, the power supplied to the reference bridge 14 is adjusted by the feedback control circuit 68 to maintain the bridge balanced. As stated above, the reference filament 40 is not sensitive to the presence of combustibles in the gas.

Referring to Figure 2, there is illustrated another embodiment of the present invention which is similar to that shown in Figure 1 but which includes means for initially setting the filaments 32 and 40 at different temperatures. This is desirable in a combustibles detector circuit for which the resistances of the detector filament 32 and the reference filament 40 are unequal, and the respective bridges operate at different initial voltages. Thus, the detector filament 32 may be maintained at a lower temperature in a balanced bridge condition than the reference filament 40. Also, if one of the two bridges is more temperature sensitive, the more sensitive bridge can be initially calibrated to operate in a balanced condition at a lower current level.

Given the optimum temperature for operating the respective filaments, the initial voltage to be applied to the respective filaments to maintain the filaments at this temperature is predetermined. As illustrated in Figure 2, the detector bridge 12 is provided with a variable resistor 101 similar to the variable resistor 42 of the reference bridge 14. The variable resistors 42 and 101 are set so that the desired voltage is applied to the filaments 32 and 40. In view of the fact that the filaments 32 and 40 operate at different temperatures, the output voltages from the bridges 12 and 14 will not be equal. Accordingly, the output voltages from the transistors 70 and 72 will not be equal, and the galvanometer 76 must be adjusted so that the initial reading is zero for a gas having no combustibles.

The calibration of the galvanometer 76 when varying voltages are applied in a balanced state to the transistors 70 and 72 is accomplished by a voltage adjustment circuit 102. The circuit 102 includes a pair of input conductors 104 and 106 connected to the output terminals (collectors) of the transistors 70 and 72 respectively. The conductors 104 and 106 are connected to inputs of an operational amplifier 108. The inputs from the transistors 70 and 72 actuate the amplifier 108 to generate a corresponding output through the slidewire potentiometer 78 to the galvanometer 76.

In view of the fact that the input signals to the operational amplifier 108 from the transistors 70 and 72 are different from the initial calibrated condition of a gas free of combustibles, the input signals must be adjusted so that there is no deflection of the galvanometer 76. For the embodiment illustrated in Figure 2 in which the detector filament 32 is operating at a lower temperature than the reference filament 40, the output voltage of the transistor 70 is lower than the output voltage of the transistor 72. Thus, a variable resistor 110 is connected to the summing junction of the conductor 104 to the amplifier 108. The variable resistor 110 is set to balance the input signal from the transistor 70 with the input signal from the transistor 72. This provides an initial zero reading of the galvanometer 76 for operation of the filaments 32 and 40 at different temperatures.

Thus, the detector bridge 12 can be operated at a reduced voltage level, which serves to extend the useful life of the detector filament 42. The detector filament 32 is exposed to lower temperature increases so the filament will not burn out. Evaporation of the catalyst on the surface of the detector filament 32 is substantially reduced to prolong the useful life of the detector filament. Once the input signals to the amplifier 108 are adjusted to initially calibrate the galvanometer 76, the operation of the feedback control circuits 56 and 68 to regulate the voltages applied to the bridges 12 and 14 illustrated in Figure 2 is identical to that described above for operation of the circuit 10 illustrated in Figure 1.

**Claims**

1. A method of measuring the amount of combustibles present in a gas, comprising exposing the gas to a catalytic filament type detector means (12) and a reference means (14) including a non-catalytic filament, feeding supply currents to the detector means (12) and to the reference means (14), independently controlling said supply currents in such a manner that the filaments of both the detector means (12) and the reference means (14) are kept at preselected temperatures, the control of the supply current to the detector means (12) being effected by the output signal of the detector means, and measuring the magnitude of the adjusted supply current to the detector means (12) in comparison to a signal corresponding to the output signal of the reference means (14) to indicate a quantitative measurement of the combustibles present in the gas, characterised by the step of effecting the control of the supply current to the detector means by feeding back the output signal from the detector means (12) to a switching means (70) at the input of the detector means, which switching means, in the case of a departure of the filament temperature from the preselected value, adjusts the magnitude of the supply current to interrupting the supply current to the detector means (12) for the period required for the filament of the detector means (12) to adopt again the preselected temperature.

2. A method according to claim 1, which includes initially balancing the output signals of the detector means (12) and the reference means (14) in response to the gas being free of combustibles.

3. A method according to claim 1, which includes controlling the rate of adjusting the magnitude of the supply current to the detector means (12).

4. A method according to claim 1, which includes switching the switching means (70) between a conductive state and a non-conductive state in response to the magnitude of the feedback signal received from the output of the detector means (12).

5. A method according to claim 1, which includes measuring the supply current representative of the concentration of combustibles in the gas in terms of the adjustment to the voltage applied to the detector means (12) for maintaining the detector filament (32) at the preselected temperature.

6. A method according to any one of claims 1 to 5, which includes feeding back an output signal from the reference means (14) to a further switching means (72) at the input of the reference means, adjusting the magnitude of the supply current to the reference means (14) in response to the magnitude of the output signal of said reference means by switching the further switching means (72) between a conductive state and a non-conductive state, and maintaining the voltage applied to the reference means (14) at a level resulting in the preselected temperature of the filament of the reference means by switching of the switching means (72) to increase or decrease the magnitude of the supply current supplied to the reference means (14).

7. A method according to claim 1, which includes actuating the switch means (70) between a conductive state and a non-conductive state to adjust the voltage applied to the detector means (12), which voltage maintains the catalytic detector filament (32) of the detector means (12) at its preselected temperature, and recording the variation in the voltage applied to the detector means when the switching means (70) is actuated for maintaining the detector filament (32) at the preselected temperature to thereby provide a quantitative electrical measurement of the concentration of the combustibles present in the gas.

8. A method according to claim 1, which includes actuating an amplifier means (80) in response to a change in the magnitude of the output signal of the detector means (12), generating a feedback signal by the amplifier means (80) to the switching means (70), actuating the switching means (70) in response to the magnitude of the feedback signal to regulate the voltage applied to the detector means (12) for maintaining the filament of the detector means at its preselected temperature, and measuring the supply current representative of the concentration of combustibles present in the gas in terms of the voltage applied to the detector means (12) for maintaining the preselected temperature.

9. A method according to any one of claims 1 to 8, which includes operating the filament of the detector means (12) at a first preselected temperature, operating the reference means (14) at a second preselected temperature, and adjusting the output signal of a selected one of the detector means (12) and the reference means (14) so that under conditions for a gas free of combustibles the respective output signals are equal to provide a readout indicating zero combustibles in the gas.

10. Apparatus for measuring the amount of combustibles present in a gas, comprising a catalytic filament type detector means (12) arranged for exposure to the gas, the detector means (12) having an input terminal (44) for receiving a supply current and an output terminal (48, 50) for supplying an output signal, reference means (14) comprising a non-catalytic filament and being arranged for exposure to the gas, a power source (20) for feeding supply currents to the detector means (12) and the reference means (14), feedback means (56, 68) for controlling said supply currents in such a manner that the filaments are kept at preselected temperatures, said feedback means comprising a feedback circuit (56) connected between the output terminal (48, 50) of the detector means (12) and the input terminal (44) of the detector means, and meter means (76) connected to the detector means (12) and the reference means (14) for recording the difference in magnitude between the supply current to the detector means (12) and a signal corresponding to the output signal of the reference means (14) as a quantitative measurement of the amount of combustibles present in the gas, characterised in that the feedback circuit (56) includes a power switching means (70) for controlling the level of the supply current to the detector means (12), which power switching means, in the case of a departure of the filament temperature from its preselected value, adjusts the magnitude of the supply current by interrupting the supply current to the detector means input terminal (44) for the period required for the filament of the detector means to adopt again the preselected temperature.

11. Apparatus according to claim 10, which includes amplifier means (80) connected to the output terminal (48) of the detector means (12) for receiving the output signal of the detector means, the amplifier means (80) being operable in response to the output signal of the detector means (12) to actuate the power switching means (70) between a conductive state and a non-conductive state to thereby adjust the voltage supplied to the detector means (12) to maintain the detector means at a preselected voltage level.

12. Apparatus according to claim 10 or claim 11, which includes voltage storage means (92) associated with the power switching means (70) for controlling the rate of change in the voltage supplied to the detector means input terminal (44) from the power switching means (70).

13. Apparatus according to claim 10, claim 11, or claim 12, wherein the meter means (76) is arranged to receive the adjusted supply current of the detector means, the meter means (76) is arranged to receive the signal corresponding to the output signal of the reference means (14), said adjusted supply current and said signal being equal in magnitude for a gas free of combustibles, and a voltage adjustment means (102) is arranged to receive and adjust a selected one of said adjusted supply current and said signal to a magnitude corresponding to the other to provide the meter means (76) with an initial zero reading for a gas free of combustibles.

14. Apparatus according to claim 10, which includes an amplifier (80) positioned in the feedback circuit (56), the amplifier being arranged to receive the output signal of the detector means (12) and to generate a corresponding feedback signal to the power switching means (70), the feedback signal from the amplifier (80) being proportional to the concentration of the combustibles in the gas and operable to actuate the power switching means (70) between a conductive state and a non-conductive state and thereby adjust the supply current to the detector means (12) for maintaining the detector means at a preselected voltage level.

15. Apparatus according to any one of claims 10 to 14, in which the detector means (12) includes a balanced bridge circuit in which the detector filament (32) is arranged to be exposed to the gas being measured, the detector filament (32) being coated with a catalytic material, the reference means (14) includes a balanced bridge circuit in which the reference filament (40) is arranged to be exposed to the gas being measured, the power switching means (70) is arranged to adjust the level of the supply current applied to the detector filament (32) to maintain the detector filament at a preselected temperature, and the meter means (76) is arranged to receive the adjusted supply current from the power switching means (70) and the signal corresponding to the output signal of the reference means (14) and provide a quantitative readout of the adjusted supply current required to maintain the detector filament (32) at its preselected temperature.

16. Apparatus according to claim 10, in which the power switching means (70) includes a transistor (TR1) operable between a conductive state and a non-conductive state to adjust the supply current applied to the detector means (12) to maintain the supply current at a preselected level.

17. Apparatus according to any one of claims 10 to 16, which includes a further feedback circuit (68) connected between an output terminal and an input terminal of the reference means (14), the further feedback circuit (68) including a further power switching means (72) for regulating the supply current applied to the reference means (14) to maintain the reference means at its preselected temperature.

18. Apparatus according to claim 13, wherein the detector means (12) and the reference means (14) can be arranged to operate at voltages of unequal magnitude, the detector means (12) and the reference means (14) being operable to generate output signals of unequal magnitude, and the voltage adjustment means (102) is provided for adjusting a selected one of said output signals so that said output signals are of equal magnitude to provide the meter means (76) with an initial signal indicating the absence of combustibles in the gas being measured.

**Patentansprüche**

1. Verfahren zum Messen der Menge in einem Gas vorhandener brennbarer Bestandteile, bei welchem das Gas einer katalytischen Phasendetektoreinrichtung (12) und einer Bezugseinrichtung (14) mit einem nichtkatalytischen Faden ausgesetzt wird, Speiseströme der Detektoreinrichtung (12) und der Bezugseinrichtung (14) zugeführt werden, die Speiseströme unabhängig in der Weise gesteuert werden, daß die Fäden sowohl der Detektoreinrichtung (12) als auch der Bezugseinrichtung (14) bei vorgewählten Temperaturen gehalten werden, wobei die Steuerung des Speisestroms zu der Detektoreinrichtung (12) durch das Ausgangssignal der Detektoreinrichtung erfolgt, und bei welchem man die Größe des eingestellten Speisestromes zu der Detektoreinrichtung (12) in Vergleich zu einem Signal mißt, welches dem Ausgangssignal der Bezugseinrichtung (14) entspricht, um eine quantitative Messung der in dem Gas vorhandenen brennbaren Bestandteile anzuzeigen, dadurch gekennzeichnet, daß die Steuerung des Speisestroms zu der Detektoreinrichtung durch Rückkopplung des Ausgangssignals aus der Detektoreinrichtung (12) zu einer Schalteinrichtung (70) am Eingang der Detektoreinrichtung erfolgt und die Schalteinrichtung in dem Fall, bei welchem die Fadentemperatur den vorgewählten Wert verläßt, die Größe des Speisestromes dadurch einstellt, daß der Speisestrom zu der Detektoreinrichtung (12) eine zeitlang unterbrochen wird, die für den Faden der Detektoreinrichtung (12) ausreicht, um wieder die vorgewählte Temperatur anzunehmen.

2. Verfahren nach Anspruch 1, dadurch gekennzeichnet, daß die Ausgangssignale der Detektoreinrichtung (12) und der Bezugseinrichtung (14) in Abhängigkeit von dem an brennbaren Bestandteilen freien Gas anfänglich abgeglichen werden.

3. Verfahren nach Anspruch 1, dadurch gekennzeichnet, daß die Geschwindigkeit der Einstellung der Speisestromstärke zur Detektoreinrichtung (12) gesteuert wird.

4. Verfahren nach Anspruch 1, dadurch gekennzeichnet, daß die Schalteinrichtung (70) zwischen einem leitenden Zustand und einem nichtleitenden Zustand geschaltet wird in Abhängigkeit von der Größe des Rückkopplungssignals, welches von dem Ausgang der Detektoreinrichtung (12) empfangen wird.

5. Verfahren nach Anspruch 1, dadurch gekennzeichnet, daß der Speisestrom gemessen wird, welcher für die Konzentration der brennbaren Bestandteile in dem Gas repräsentativ ist, als Justierung bzw. Anpassung an die an die Detektoreinrichtung (12) angelegte Spannung, um den Detektorfaden (32) auf der vorgewählten Temperatur zu halten.

6. Verfahren nach einem der Ansprüche 1 bis 5, dadurch gekennzeichnet, daß ein Ausgangssignal aus der Bezugseinrichtung (14) zu einer weiteren Schalteinrichtung (72) am Eingang der Bezugseinrichtung rückgekoppelt wird, die Speisestromstärke der Bezugseinrichtung (14) in Abhängigkeit zur Größe des Ausgangssignals der Bezugseinrichtung dadurch eingestellt bzw. geregelt wird, daß die weitere Schalteinrichtung (72) zwischen einem leitenden Zustand und einem nichtleitenden Zustand geschaltet wird, und daß die an die Bezugseinrichtung (14) angelegte Spannung auf einem Niveau gehalten wird, welches zu der vorgewählten Temperatur des Fadens der Bezugseinrichtung dadurch führt, daß die Schalteinrichtung (72) zur Erhöhung oder Erniedrigung der Speisestromstärke geschaltet wird, welcher der Bezugseinrichtung (14) zugeführt wird.

7. Verfahren nach Anspruch 1, dadurch gekennzeichnet, daß die Schalteinrichtung (70) zwischen einem leitenden Zustand und einem nichtleitenden Zustand betätigt bzw. gesteuert wird, um die Spannung einzuregeln, die an die Detektoreinrichtung (12) angelegt ist, wobei die Spannung den katalytischen Detektorfaden (32) der Detektoreinrichtung (12) auf seiner vorgewählten Temperatur hält, und daß die Veränderung der Spannung, welche an die Detektoreinrichtung angelegt ist, aufgezeichnet wird, wenn die Schalteinrichtung (70) zum Halten des Detektorfadens (32) an der vorgewählten Temperatur gesteuert wird, um dadurch eine quantitative elektrische Messung der Konzentration der brennbaren Bestandteile vorzusehen, die in dem Gas vorhanden sind.

8. Verfahren nach Anspruch 1, dadurch gekennzeichnet, daß eine Verstärkungseinrichtung (80) in Abhängigkeit von einer Veränderung der Größe des Ausgangssignals der Detektoreinrichtung (12) gesteuert wird, ein Rückkopplungssignal durch die Verstärkungseinrichtung (80) zu der Schalteinrichtung (70) erzeugt wird, die Schalteinrichtung (70) in Abhängigkeit von der Größe des Rückkopplungssignals betätigt bzw. gesteuert wird, um die Spannung zu regulieren, die an der Detektoreinrichtung (12) angelegt ist, um den Faden der Detektoreinrichtung auf seiner vorgewählten Temperatur zu halten, und daß der Speisestrom gemessen wird, der für die Konzentration der brennbaren Bestandteile repräsentativ ist, die sich in dem Gas befinden, un zwar als die Spannung, die an die Detektoreinrichtung (12) angelegt ist, um die vorgewählte Temperatur zu halten.

9. Verfahren nach einem der Ansprüche 1 bis 8, dadurch gekennzeichnet, daß der Faden der Detektoreinrichtung (12) bei einer ersten vorgewählten Temperatur betrieben wird, die Bezugseinrichtung (14) bei einer zweiten vorgewählten Temperatur betrieben wird und das Ausgangssignal einer ausgewählten Einrichtung der Detektoreinrichtungen (12) und der Bezugseinrichtung (14) so eingestellt wird, daß unter Bedingungen für ein Gas, welches frei an brennbaren Bestandteilen ist, die entsprechenden Ausgangssignale gleich sind, um eine Ablesung vorzusehen, welche anzeigt, daß keine brennbaren Bestandteile in dem Gas vorhanden sind.

10. Vorrichtung zum Messen der Menge in einem Gas vorhandener brennbarer Bestandteile mit einer Detektoreinrichtung (12) mit katalytischem Faden, die so angeordnet ist, daß sie dem Gas ausgesetzt ist, wobei sie einen Eingangsanschluß (44) aufweist zur Aufnahme eines Speisestromes und einen Ausgangsanschluß (48, 50) für die Zufuhr eines Ausgangssignals, Bezugseinrichtungen (14) aufweist mit einem nichtkatalytischen Faden, die so angeordnet ist, daß sie dem Gas ausgesetzt ist, eine Energiequelle (20) aufweist für das Zuführen von Speiseströmen zu der Detektoreinrichtung (12) sowie der Bezugseinrichtung (14), Rückkopplungseinrichtungen (56, 68) aufweist für die Steuerung der Speiseströme derart, daß die Fäden auf vorgewählten Temperaturen gehalten werden, wobei die Rückkopplungseinrichtung eine Rückkopplungsschaltung (56) aufweist, die zwischen dem Ausgangsanschluß (48, 50) der Detektoreinrichtung (12) und dem Eingangsanschluß (44) der Detektoreinrichtung verbunden ist, und Meßeinrichtungen (76) aufweist, die mit der Detektoreinrichtung (12) und der Bezugseinrichtung (14) verbunden sind zur Aufzeichnung der Differenz der Größe zwischen dem Speisestrom zur Detektoreinrichtung (12) und einem Signal, welches dem Ausgangssignal der Bezugseinrichtung (14) entspricht, als eine quantitative Messung der Menge von in dem Gas vorhandener brennbarer Bestandteile, dadurch gekennzeichnet, daß die Rückkopplungsschaltung (56) eine Kraftschaltungseinrichtung (70) aufweist für die Steuerung des Niveaus des Speisestromes zu der Detektoreinrichtung (12), und daß die Kraftschaltungseinrichtung in dem Fall, daß die Fadentemperatur ihren vorgewählten Wert verläßt, die Größe des Speisestromes dadurch einstellt, daß der Speisestrom zum Eingangsanschluß (44) der Detektoreinrichtung eine zeitlang unterbrochen wird, die ausreicht, daß der Faden der Detektoreinrichtung wieder die vorgewählte Temperatur einnimmt.

11. Vorrichtung nach Anspruch 10, dadurch gekennzeichnet, daß eine Verstärkungseinrichtung (80) mit dem Ausgangsanschluß (48) der Detektoreinrichtung (12) verbunden ist für die Aufnahme des Ausgangssignals der Detektoreinrichtung und daß die Verstärkungseinrichtung (80) in Abhängigkeit von dem Ausgangssignal der Detektoreinrichtung (12) betreibbar ist, um die Kraftschaltungseinrichtung (70) zwischen einem leitenden Zustand und einem nichtleitenden Zustand zu betätigen, um hierdurch die Spannung einzustellen, welche der Detektoreinrichtung (12) zugeführt wird, um die Detektoreinrichtung auf einem vorbestimmten Spannungsniveau zu halten.

12. Vorrichtung nach Anspruch 10 oder 11, dadurch gekennzeichnet, daß sie eine Spannungsspeichereinrichtung (92) aufweist, welche der Kraftschaltungseinrichtung (70) zugeordnet ist zum Steuern der Geschwindigkeit der Änderung der Spannung, welche dem Eingangsanschluß (44) der Detektoreinrichtung von der Kraftschaltungseinrichtung (70) zugeführt wird.

13. Vorrichtung nach Anspruch 10, 11 oder 12, dadurch gekennzeichnet, daß die Meßeinrichtung (76) derart angeordnet ist, daß sie den eingestellten Speisestrom der Detektoreinrichtung aufnimmt, die Meßeinrichtung (76) derart angeordnet ist, daß sie das Signal aufnimmt, welches dem Ausgangssignal der Bezugseinrichtung (14) entspricht, wobei der eingestellte Speisestrom und das Signal für ein an brennbaren Bestandteilen freies Gas gleiche Größe haben, und eine Spannungseinstelleinrichtung (102) angeordnet ist, um einen ausgewählten eingestellten Speisestrom und das Signal aufzunehmen und einzurichten auf eine Größe, welche der jeweils anderen Größe entspricht, um die Meßeinrichtung (76) mit einer anfänglichen Nullablesung für ein an brennbaren Bestandteilen freies Gas zu versehen.

14. Vorrichtung nach Anspruch 10, dadurch gekennzeichnet, daß sie einen Verstärker (80) aufweist, der in der Rückkopplungsschaltung (56) sowie derart angeordnet ist, daß er das Ausgangssignal der Detektoreinrichtung (12) aufnimmt und ein entsprechendes Rückkopplungssignal zu der Kraftschaltungseinrichtung (70) erzeugt, und daß das Rückkopplungssignal von dem Verstärker (80) proportional zu der Konzentration der brennbaren Bestandteile in dem Gas ist und derart betreibbar ist, daß es die Kraftschaltungseinrichtung (70) zwischen einem leitenden Zustand und einem nichtleitenden Zustand betätigt bzw. steuert und dadurch den Speisestrom zu der Detektoreinrichtung (12) einstellt, um die Detektoreinrichtung auf einem vorgewählten Spannungsniveau zu halten.

15. Vorrichtung nach einem der Ansprüche 10 bis 14, dadurch gekennzeichnet, daß die Detektoreinrichtung (12) eine abgeglichene Brückenschaltung aufweist, in welcher der Detektorfaden (32) so angeordnet ist, daß er dem in Messung befindlichen Gas ausgesetzt ist, wobei der Detektorfaden (32) mit einem katalytischen Material beschichtet ist, daß die Bezugseinrichtung (14) eine abgeglichene Brückenschaltung aufweist, in welcher der Bezugsfaden (40) so angeordnet ist, daß er dem in Messung befindlichen Gas ausgesetzt wird, daß die Kraftschaltungseinrichtung (70) derart angeordnet ist, daß sie das Niveau bzw. die Größe des Speisestromes einstellt, der auf den Detektorfaden (32) aufgebracht wird, um den Detektorfaden auf einer vorgewählten Temperatur zu halten, und daß die Meßeinrichtung (76) derart angeordnet ist, daß sie den eingestellten Speisestrom aus der Kraftschaltungseinrichtung (70) und das Signal aufnimmt, welches dem Ausgangssignal der Bezugseinrichtung (14) entspricht und eine quantitative Ablesung des eingestellten Speisestromes vorsieht, der erforderlich ist, um den Detektorfaden (32) auf seiner vorgewählten Temperatur zu halten.

16. Vorrichtung nach Anspruch 10, dadurch gekennzeichnet, daß die Kraftschalteinrichtung (70) einen Transistor (TR1) aufweist, der zwischen einem leitenden Zustand und einem nichtleitenden Zustand betreibbar ist, um den Speisestrom einzustellen, der auf die Detektoreinrichtung (12) aufgebracht wird, um den Speisestrom auf einem vorgewählten Niveau zu halten.

17. Vorrichtung nach einem der Ansprüche 10 bis 16, dadurch gekennzeichnet, daß sie eine weitere Rückkopplungsschaltung (68) aufweist, die zwischen einem Ausgangsanschluß und einem Eingangsanschluß der Bezugseinrichtung (14) verbunden ist, wobei die weitere Rückkopplungsschaltung (68) eine weitere Kraftschaltungseinrichtung (72) aufweist für die Regulierung des Speisestromes der auf die Bezugseinrichtung (14) aufgebracht wird, um die Bezugseinrichtung auf ihrer vorgewählten Temperatur zu halten.

18. Vorrichtung nach Anspruch 13, dadurch gekennzeichnet, daß die Detektoreinrichtung (12) und die Bezugseinrichtung (14) derart angeordnet sein können, daß sie bei Spannungen ungleicher Größe arbeiten, daß die Detektoreinrichtung (12) und die Bezugseinrichtung (14) betreibbar sind, um Ausgangssignale ungleicher Größe zu erzeugen, und daß die Spannungseinstelleinrichtung (102) für das Einstellen eines ausgewählten Signales der Ausgangssignale derart vorgesehen ist, daß die Ausgangssignale gleicher Größe haben, um eine Meßeinrichtung (76) vorzusehen mit einem anfänglichen Signal, welches die Abwesenheit von in einem in Messung befindlichen Gas vorhandenen brennbaren Bestandteilen anzeigt.

**Revendications**

1. Un procédé de mesure de la quantité de constituants combustibles présents dans un gaz, dans lequel on expose au gaz des moyens détecteurs (12) du type à filament catalytique et des moyens de référence (14) comprenant un filament non catalytique, on applique des courants d'alimentation aux moyens détecteurs (12) et aux moyens de référence (14), on commande indépendamment ces courants d'alimentation d'une manière telle que les filaments des moyens détecteurs (12) comme des moyens de référence (14) soient maintenus à des températures présélectionnées, la commande du courant d'alimentation appliqué aux moyens détecteurs (12) étant effectuée par le signal de sortie des moyens détecteurs, et on mesure la valeur du courant d'alimentation réglé qui est appliqué aux moyens détecteurs (12), par comparaison avec un signal correspondant au signal de sortie des moyens de référence (14), pour donner une mesure quantitative des constituants combustibles présents dans le gaz, caractérisé par l'opération consistant à effectuer la commande du courant d'alimentation appliqué aux moyens détecteurs en renvoyant le signal de sortie des moyens détecteurs (12) vers des moyens de commutation (70) placés à l'entrée des moyens détecteurs et, dans le cas d'un écart de la température du filament par rapport à la valeur présélectionnée, ces moyens de commutation règlent la valeur du courant d'alimentation en interrompant le courant d'alimentation appliqué aux moyens détecteurs (12) pendant la durée nécessaire pour que le filament des moyens détecteurs (12) reprenne la température présélectionnée.

2. Un procédé selon la revendication 1, qui comprend l'équilibrage initial des signaux de sortie des moyens détecteurs (12) et des moyens de référence (14), dans les conditions dans lesquelles le gaz est exempt de constituants combustibles.

3. Un procédé selon la revendication 1, qui comprend la limitation de la vitesse de réglage de la valeur du courant d'alimentation appliqué aux moyens détecteurs (12).

4. Un procédé selon la revendication 1, qui comprend la commutation des moyens de commutation (70) entre un état conducteur et un état non conducteur sous la dépendance de la valeur du signal de réaction reçu à partir de la sortie des moyens détecteurs (12).

5. Un procédé selon la revendication 1, qui comprend la mesure du courant d'alimentation représentatif de la concentration en constituants combustibles dans le gaz, exprimée par le réglage de la tension appliquée aux moyens détecteurs (12) pour maintenir le filament détecteur à la température présélectionnée.

6. Un procédé selon l'une quelconque des revendications 1 à 5, qui comprend le renvoi d'un signal de sortie des moyens de référence (14) vers des moyens de commutation supplémentaires (72) à l'entrée des moyens de référence, le réglage de la valeur du courant d'alimentation appliquée aux moyens de référence (14) sous la dépendance de la valeur du signal de sortie des moyens de référence, par commutation des moyens de commutation supplémentaires (72) entre un état conducteur et un état non conducteur, et le maintien de la tension appliquée aux moyens de référence (14) à un niveau qui résulte de la température présélectionnée du filament des moyens de référence, par commutation des moyens de commutation (72) pour augmenter ou diminuer la valeur du courant d'alimentation appliqué aux moyens de référence (14).

7. Un procédé selon la revendication 1, qui comprend l'actionnement des moyens de commutation (70) pour les faire commuter entre un état conducteur et un état non conducteur, afin de régler la tension appliquée aux moyens détecteurs (12), cette tension maintenant le filament détecteur catalytique (32) des moyens détecteurs (12) à sa température présélectionnée, et l'enregistrement de la variation de la tension appliquée aux moyens détecteurs lorsque les moyens de commutation (70) sont actionnés pour maintenir le filament détecteur (32) à la température présélectionnée, pour donner ainsi une mesure électrique quantitative de la concentration des constituants combustibles présents dans le gaz.

8. Un procédé selon la revendication 1, qui comprend l'actionnement de moyens amplificateurs (80) sous l'effet d'une variation de la valeur du signal de sortie des moyens détecteurs (12), la génération d'un signal de réaction, appliqué aux moyens de commutation (70) par les moyens amplificateurs (80), l'actionnement des moyens de commutation (70) sous la dépendance de la valeur du signal de réaction, pour réguler la tension appliquée aux moyens détecteurs (12), afin de maintenir le filament des moyens détecteurs à sa température présélectionnée, et la mesure du courant d'alimentation représentatif de la concentration en constituants combustibles présents dans le gaz, exprimée par la tension appliquée aux moyens détecteurs (12), pour maintenir la température présélectionnée.

9. Un procédé selon l'une quelconque des revendications 1 à 8, dans lequel on fait fonctionner le filament des moyens détecteurs (12) à une première température présélectionnée, on fait fonctionner les moyens de référence (14) à une seconde température présélectionnée, et on règle le signal de sortie de moyens sélectionnés parmi les moyens détecteurs (12) et les moyens de référence (14), de façon que dans des conditions correspondant à un gaz exempt de constituants combustibles, les signaux de sortie respectifs soient égaux, pour donner une indication représentant l'absence de constituants combustibles dans le gaz.

10. Appareil pour la mesure de la quantité de constituants combustibles présents dans un gaz, comprenant des moyens détecteurs (12) du type à filament catalytique, conçus pour être exposés au gaz, les moyens détecteurs (12) ayant une borne d'entrée (44) pour recevoir un courant d'alimentation et une borne de sortie (48, 50) pour fournir un signal de sortie, des moyens de référence (14) comprenant un filament non catalytique et étant conçus de façon à être exposés au gaz, une source d'énergie (20) destinée à fournir des courants d'alimentation aux moyens détecteurs (12) et aux moyens de référence (14), des moyens de réaction (56, 58) destinés à commander les courants d'alimentation d'une manière telle que les filaments soient maintenus à des températures présélectionnées, ces moyens de réaction comprenant un circuit de réaction (56) connecté entre la borne de sortie (48, 50) des moyens détecteurs (12) et la borne d'entrée (44) des moyens détecteurs, et des moyens de mesure (76) connectés aux moyens détecteurs (12) et aux moyens de référence (14) pour enregistrer la différence de valeur entre le courant d'alimentation appliqué aux moyens détecteurs (12) et un signal correspondant au signal de sortie des moyens de référence (14), en tant que mesure quantitative de la quantité de constituants combustibles présents dans le gaz, caractérisé en ce que le circuit de réaction (56) comprend des moyens de commutation de puissance (70) destinés à commander le niveau du courant d'alimentation appliqué aux moyens détecteurs (12) et, dans le cas d'un écart de la température du filament par rapport à sa valeur présélectionnée, ces moyens de commutation de puissance règlent la valeur du courant d'alimentation en interrompant le courant d'alimentation appliqué à la borne d'entrée des moyens détecteurs (44) pendant la durée nécessaire pour que le filament des moyens détecteurs reprenne la température présélectionnée.

11. Appareil selon la revendication 10, comprenant des moyens amplificateurs (80) connectés à la borne de sortie (48) des moyens détecteurs (12) pour recevoir le signal de sortie des moyens détecteurs, les moyens amplificateurs (80) pouvant fonctionner sous la dépendance du signal de sortie des moyens détecteurs (12) pour actionner les moyens de commutation de puissance (70) de façon à les commuter entre un état conducteur et un état non conducteur, pour régler ainsi la tension qui est appliquée aux moyens détecteurs (12), afin de maintenir les moyens détecteur à un niveau de tension présélectionnée.

12. Appareil selon la revendication 10 ou la revendication 11, comprenant des moyens de stockage de tension (92) associés aux moyens de commutation de puissance (70) pour limiter la vitesse de variation de la tension appliquée à la borne d'entrée des moyens détecteurs (44) à partir des moyens de commutation de puissance (70).

13. Appareil selon la revendication 10, la revendication 11 ou la revendication 12, dans lequel les moyens de mesure (76) sont conçus de façon à recevoir le courant d'alimentation réglé des moyens détecteurs, les moyens de mesure (76) sont conçus de façon à recevoir le signal correspondant au signal de sortie des moyens de référence (14), le courant d'alimentation réglé et ce signal ayant des valeurs égales pour un gaz exempt de constituants combustibles, et des moyens de réglage de tension (102) sont conçus de façon à recevoir et à régler un paramètre sélectionné entre le courant d'alimentation réglé et ledit signal, pour lui donner une valeur correspondant à l'autre, de façon que les moyens de mesure (76) indiquent initialement une valeur nulle pour un gaz exempt de constituants combustibles.

14. Appareil selon la revendication 10, comprenant un amplificateur (80) positionné dans le circuit de réaction (56), l'amplificateur étant conçu de façon à recevoir le signal de sortie des moyens détecteurs (12) et à générer un signal de réaction correspondant dirigé vers les moyens de commutation de puissance (70), le signal de réaction provenant de l'amplificateur (80) étant proportionnel à la concentration de constituants combustibles dans le gaz, et pouvant actionner les moyens de commutation de puissance (70) pour les faire commuter entre un état conducteur et un état non conducteur et régler ainsi le courant d'alimentation appliqué aux moyens détecteurs (12), pour maintenir les moyens détecteurs à un niveau de tension présélectionné.

15. Appareil selon l'une quelconque des revendications 10 à 14, dans lequel les moyens détecteurs (12) comprennent un circuit en pont équilibré dans lequel le filament détecteur (32) est disposé de façon à être exposé au gaz qui est mesuré, le filament détecteur (32) étant revêtu d'une matière catalytique, les moyens de référence (14) comprennent un circuit en pont équilibré dans lequel le filament de référence (40) est disposé de façon à être exposé au gaz qui est mesuré, les moyens de commutation de puissance (70) sont conçus de façon à régler le niveau du courant d'alimentation appliqué au filament détecteur (32) pour maintenir le filament détecteur à une température présélectionnée, et les moyens de mesure (76) sont conçus de façon à recevoir le courant d'alimentation réglé provenant des moyens de commutation de puissance (70) et le signal correspondant au signal de sortie des moyens de référence (14), et de façon à fournir une indication quantitative du courant d'alimentation réglé qui est nécessaire pour maintenir le filament détecteur (32) à sa température présélectionnée.

16. Appareil selon la revendication 10, dans lequel les moyens de commutation de puissance (70) comprennent un transistor (TR1) qu'on peut commuter entre un état conducteur et un état non conducteur pour régler le courant d'alimentation appliqué aux moyens détecteurs (12) afin de maintenir le courant d'alimentation à un niveau présélectionné.

17. Appareil selon l'une quelconque des revendications 10 à 16, comprenant un circuit de réaction supplémentaire (68) connecté entre une borne de sortie et une borne d'entrée des moyens de référence (14), le circuit de réaction supplémentaire (68) comprenant des moyens de commutation de puissance supplémentaires (72) pour réguler le courant d'alimentation appliqué aux moyens de référence (14) de façon à maintenir les moyens de référence à leur température présélectionnée.

18. Appareil selon la revendication 13, dans lequel les moyens détecteurs (12) et les moyens de référence (14) sont conçus de façon à pouvoir fonctionner à des tensions de valeur inégale, les moyens détecteur (12) et les moyens de référence (14) pouvant fonctionner de façon à générer des signaux de sortie de valeur inégale, et les moyens de réglage de tension (102) sont destinés à régler l'un sélectionné des signaux de sortie, de façon que ces signaux de sortie soient de valeur égale pour appliquer aux moyens de mesure (76) un signal initial indiquant l'absence de constituants combustibles dans le gaz qui est mesuré.

FIG. 1

FIG. 2